# FASCICULE DE BREVET EUROPEEN

(11) **EP 2 893 589 B1**
(45) Date de publication et mention de la délivrance du brevet: **27.07.2016**
(21) Numéro de dépôt: 13766235.9
(22) Date de dépôt: 30.08.2013
(51) Int. Cl.: H01M 8/241, H01M 8/0297, H01M 8/2404, H01M 8/0247, H01M 8/0206, H01M 8/1018

(54) **PILE A COMBUSTIBLE LIMITANT LE PHENOMENE DE CORROSION**
BRENNSTOFFZELLE FÜR BEGRENZUNG DES KORROSIONSPHÄNOMENS
FUEL CELL LIMITING THE PHENOMENON OF CORROSION

(30) Priorité: 03.09.2012 FR 1258200
(43) Date de publication de la demande: 15.07.2015
(73) Titulaire: Commissariat à l'Énergie Atomique et aux Énergies Alternatives, 75015 Paris (FR)
(72) Inventeur: VINCENT, Rémi, F-38000 Grenoble (FR); BARTHE, Benoît, F-73310 Chindrieux (FR); TREMBLAY, Denis, F-38340 Pommiers-la-Placette (FR)
(74) Mandataire: GIE Innovation Competence Group
(86) Numéro de dépôt international: PCT/EP2013/068036
(87) Numéro de publication internationale: WO 2014/033283

(56) Documents cités:
- WO-A1-2006/016462
- WO-A1-2009/043600
- WO-A1-2012/163842
- JP-A- 2008 293 744
- US-A1- 2008 292 916

## Description

L'invention concerne les piles à combustible, et en particulier les piles à combustible à membrane d'échange de protons (dites PEM pour Proton Exchange Membrane en langue anglaise).

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Du dihydrogène est utilisé comme carburant de la pile à combustible. Le dihydrogène est oxydé et ionisé sur une électrode de la pile et du dioxygène de l'air est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques d'écoulement, par exemple en métal, empilées les unes sur les autres. La membrane est disposée entre deux plaques d'écoulement. Les plaques d'écoulement peuvent comprendre des canaux et orifices pour guider les réactifs et les produits vers/depuis la membrane. Les plaques sont également électriquement conductrices pour former des collecteurs des électrons générés au niveau de l'anode. Des couches de diffusion gazeuse (pour Gaz Diffusion Layer en langue anglaise) sont interposées entre les électrodes et les plaques d'écoulement et sont en contact avec les plaques d'écoulement.

Les plaques d'écoulement sont en contact avec des solutions très acides. Du côté de la cathode, la plaque est soumise à de l'air sous pression dans un environnement hautement oxydant. Du côté de l'anode, la plaque est en contact avec de l'hydrogène. Dans de telles conditions, les plaques métalliques subissent des phénomènes de corrosion. La corrosion d'une plaque entraîne d'une part l'émission d'ions métalliques venant altérer le fonctionnement de la membrane électrolytique. La corrosion de la plaque entraîne d'autre part la formation d'une couche d'oxyde isolante sur le métal, ce qui augmente sa résistance de contact avec la couche de diffusion gazeuse. La résistance électrique entre la plaque d'écoulement et la couche de diffusion gazeuse est alors accrue. Ces phénomènes induisent une réduction des performances de la pile à combustible. Les plaques d'écoulement doivent donc présenter une conductivité électrique élevée tout en évitant des phénomènes d'oxydation et de corrosion.

Le développement industriel des piles à combustible implique une importante baisse des coûts de fabrication des différents composants. En particulier, les plaques d'écoulement présentent encore un coût rédhibitoire pour une utilisation à grande échelle.

Pour réduire le coût des plaques d'écoulement, celles-ci sont généralement formées sous forme de plaque bipolaire incluant deux plaques d'écoulement. Une solution éprouvée industriellement consiste à emboutir deux feuilles métalliques en acier inoxydable et à les assembler dos à dos par soudage laser pour former des plaques d'écoulement pour des cellules adjacentes. Les soudures sont réalisées dans le fond de canaux, les fonds des canaux des deux feuilles métalliques dos à dos étant placés en contact. Afin de réduire les coûts de fabrication, les feuilles métalliques dos à dos ont une même géométrie.

Le document US2006046130 décrit une pile à combustible destinée à limiter l'influence des variations de forces de compression sur un empilement de cellules. Les plaques bipolaires sont formées par assemblage de deux feuilles métalliques. Chaque feuille métallique présente un relief pour former des canaux d'écoulement de gaz. Une multitude de canaux adjacents s'étend selon une même direction. Deux feuilles métalliques sont assemblées en plaçant en contact le fond de certains canaux de ces feuilles, puis en réalisant des soudures dans ces fonds.

Le document JP2008293744 décrit une pile à combustible ayant une plaque bipolaire et une couche de diffusion gazeuse avec des zones d'épaisseur différentes afin d'améliorer la diffusion gazeuse.

En pratique. les piles à combustible connues présentent un fonctionnement relativement hétérogène au niveau de l'assemblage membranes/électrodes. Cette hétérogénéité s'explique par divers phénomènes tels que l'évolution de l'humidité des gaz entre l'entrée et la sortie de l'assemblage membranes/électrodes. Cette hétérogénéité induit une augmentation locale de la densité de courant, favorisant la corrosion localisée du carbone. Par ailleurs, on a constaté qu'une plus grande densité de courant est présente au niveau des soudures, les soudures induisant une forte augmentation locale de conductivité. Les soudures des plaques bipolaires empilées étant le plus souvent superposées, on constate une plus forte densité de courant à travers l'empilement au niveau d'une telle superposition de soudures.

L'invention vise notamment à résoudre cet inconvénient. L'invention vise notamment à obtenir une pile à combustible d'un coût réduit et favorisant une homogénéité de la densité de courant à travers les assemblages membranes/électrodes. L'invention porte ainsi sur une pile à combustible pile à combustible et sur un procédé de fabrication d'une pile à combustible, tels que définis dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple de pile à combustible ;
- la figure 2 est une vue en coupe de la pile à combustible de la figure 1 ;
- la figure 3 est une vue en coupe agrandie au niveau d'une soudure d'une pile à combustible selon un mode de réalisation de l'invention ;
- la figure 4 est une vue schématique de dessus de soudures illustrant un exemple de positionnement de retraits dans une couche de diffusion gazeuse ;
- la figure 5 est un exemple de diagramme permettant de déterminer l'épaisseur d'une couche de diffusion gazeuse en fonction de la compression qui lui est appliquée, pour différentes valeurs d'épaisseur initiales ;
- la figure 6 est un exemple de diagramme permettant de déduire la conductivité électrique dans l'épaisseur d'une couche de diffusion gazeuse en fonction de la contrainte de compression qui lui est appliquée ;
- la figure 7 est une vue en coupe d'une couche de diffusion gazeuse durant un exemple de procédé par voie humide de formation d'un relief par filigrane ;
- la figure 8 est une vue de dessus d'un dispositif pour la mise en oeuvre d'un procédé par voie humide de formation d'un relief par filigrane.

L'invention propose une pile à combustible munie de deux assemblages membrane/électrodes et d'une plaque bipolaire métallique interposée entre ces assemblages. La plaque bipolaire comprend deux feuilles métalliques en vis-à-vis d'assemblages membrane/électrodes respectifs et solidarisées par des soudures. Une couche de diffusion gazeuse est interposée et comprimée entre un assemblage membrane/électrodes et la plaque bipolaire. La pression de contact de la couche de diffusion gazeuse avec la plaque bipolaire au niveau des soudures est inférieure à sa pression de contact moyenne avec la plaque bipolaire. À cet effet, la couche de diffusion gazeuse au repos présente avantageusement une épaisseur au niveau des soudures inférieure à l'épaisseur moyenne de la couche de diffusion gazeuse.

Ainsi, la conductivité dans l'épaisseur de la couche de diffusion gazeuse au niveau des soudures est réduite, ce qui compense la conductivité à travers la plaque d'écoulement au niveau des soudures très supérieure à sa conductivité dans les autres zones. L'invention permet ainsi d'optimiser de façon significative l'homogénéité de la densité de courant à travers la pile à combustible (et donc d'améliorer la résistance à la corrosion et la longévité de la pile à combustible), sans nécessiter une augmentation de la densité de soudures et donc sans surcoût industriel. L'invention va à l'encontre de la démarche usuelle de l'homme du métier d'augmenter systématiquement la conductivité des plaques bipolaires en vue d'une résistance électrique minimale.

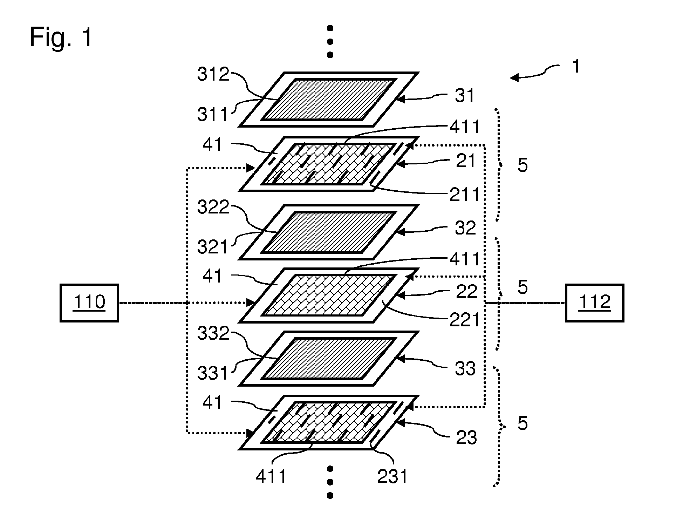

La figure 1 est une vue en perspective éclatée schématique d'une partie d'une pile à combustible 1 selon un mode de réalisation de l'invention. La pile à combustible 1 est du type à membrane échangeuse de protons ou membrane à électrolyte polymère. La pile à combustible 1 comprend plusieurs cellules 5 superposées. La pile à combustible 1 comprend une source de carburant 110 alimentant en dihydrogène une entrée de chaque cellule 5. La pile à combustible 1 comprend également une source d'air 112 alimentant une entrée de chaque cellule en air, contenant de l'oxygène utilisé comme oxydant. Chaque cellule 5 comprend également des canaux d'échappement non illustrés. Chaque cellule 5 peut également présenter un circuit de refroidissement non illustré.

Chaque cellule 5 comprend un assemblage membrane/électrodes. La pile à combustible 1 illustrée comprend notamment des assemblages membrane/électrodes ou AME 31, 32 et 33. Les assemblages membrane/électrodes sont ici superposés et connectés électriquement en série. Chaque assemblage membrane/électrodes comprend une couche d'électrolyte formée par exemple d'une membrane polymère (respectivement 311, 321 et 331 pour les assemblages 31, 32 et 33).

Un assemblage membrane/électrodes comprend également une cathode (non illustrée à la figure 1) et une anode (respectivement 312, 322 et 332 pour les assemblages 31, 32 et 33) placées de part et d'autre de l'électrolyte et fixées sur cet électrolyte.

La couche d'électrolyte forme une membrane semi-perméable permettant une conduction protonique tout en étant imperméable aux gaz présents dans la cellule. La couche d'électrolyte empêche également un passage des électrons entre l'anode et la cathode.

Chaque cellule 5 présente des plaques de guidage d'écoulement disposées en vis-à-vis respectivement de l'anode et de la cathode. Chaque cellule 5 présente de plus une couche de diffusion de gaz (non illustrée) disposée entre l'anode et la plaque de guidage. Chaque cellule 5 présente par ailleurs une couche de diffusion de gaz (non illustrée) disposée entre la cathode et la plaque de guidage.

Entre chaque couple d'AME adjacents, un couple de guides d'écoulement est disposé. Les guides d'écoulement de chaque couple sont solidaires pour former une plaque bipolaire. Ainsi, la pile à combustible 1 comporte une plaque bipolaire 21 (disposée entre les AME 31 et 32), une plaque bipolaire 22 (disposée entre les AME 32 et 33) et une plaque bipolaire 23. Chaque guide d'écoulement est formé d'une feuille métallique. La plaque bipolaire 21 comprend ainsi une feuille métallique 41 orientée vers la cathode de l'AME 31 et une feuille métallique 42 orientée vers l'anode de l'AME 32. La feuille métallique 41 comporte une surface en relief 411 définissant des canaux d'écoulement 412. La feuille métallique 42 comporte une surface en relief définissant des canaux d'écoulement 422. Les feuilles métalliques 41 et 42 sont solidarisées par les soudures 211, 221 et 231 respectivement pour les plaques bipolaires 21,22 et 23. Pour des raisons de lisibilité, seul un nombre réduit de soudures est illustré, ces soudures étant illustrées très schématiquement. Les soudures 211, 221 et 231 des différentes plaques bipolaires sont ici superposées dans un but de simplification industrielle. L'invention s'avère particulièrement avantageuse avec une telle superposition (selon la direction de l'empilement) des soudures de différentes plaques bipolaires de l'empilement de cellules 5. Une telle superposition de zones ayant des conductivités potentiellement élevées est susceptible d'induire des densités de courant selon la direction de l'empilement accrues localement.

De façon connue en soi, durant le fonctionnement de la pile à combustible 1, de l'air s'écoule entre les AME et les feuilles métalliques 41, et du dihydrogène s'écoule entre les AME et les feuilles métalliques 42. Un courant série s'établit ainsi à travers l'empilement de cellules 5. Au niveau des anodes, le dihydrogène est ionisé pour produire des protons qui traversent les AME. Les électrons produits par cette réaction sont collectés par une plaque 21. Les électrons produits sont ensuite appliqués sur une charge électrique connectée à la pile à combustible 1 pour former un courant électrique. Au niveau des cathodes, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule de la pile à combustible génère usuellement une tension continue entre l'anode et la cathode de l'ordre de 1 V.

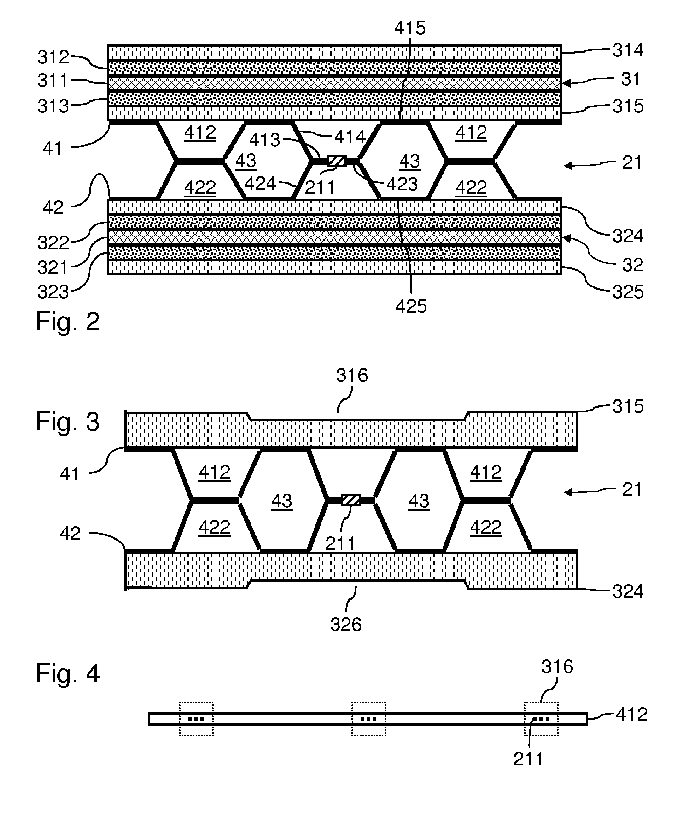

La figure 2 est une vue en coupe schématique de la pile à combustible 1 au niveau d'une plaque bipolaire 21. L'AME 31 comporte des couches de diffusion de gaz 314 et 315 disposées respectivement sur l'anode 312 et sur la cathode 313. L'AME 32 comporte des couches de diffusion de gaz 324 et 325 disposées respectivement sur l'anode 322 et sur la cathode 323. Les couches de diffusion de gaz 314 et 324 servent à diffuser du dihydrogène vers leur anode respective. Les couches de diffusion de gaz 315 et 325 servent à diffuser du dioxygène vers leur cathode respective. La couche de diffusion gazeuse 315 est interposée et comprimée entre la feuille métallique 41 de la plaque bipolaire 21 et la cathode 313 de l'AME 31. La couche de diffusion gazeuse 324 est interposée et comprimée entre la feuille métallique 42 de la plaque bipolaire 21 et l'anode 322 de l'AME 32.

La feuille métallique 41 présente un relief dans lequel sont formés des canaux d'écoulement 412 successifs, s'étendant selon une direction longitudinale. Les canaux d'écoulement 412 sont répartis selon une direction transversale. La feuille métallique 42 présente un relief dans lequel sont formés des canaux d'écoulement 422 successifs, s'étendant selon une direction longitudinale. Les canaux d'écoulement 422 sont répartis selon une direction transversale. Les canaux d'écoulement 412 et 422 sont avantageusement superposés. Les feuilles métalliques 41 et 42 ainsi accolées définissent avantageusement entre elles un circuit d'écoulement 43 pour du liquide de refroidissement. Les canaux d'écoulement 412 sont délimités par des fonds 413, des flancs 414 et des crêtes 415. De façon similaire, les canaux d'écoulement 422 sont délimités par des fonds 423, des flancs 424 et des crêtes 425. Les fonds 413 et 423 sont disposés en contact pour minimiser la résistance de contact entre les feuilles métalliques 41 et 42. Les crêtes 415 et 425 forment des zones de contact respectivement avec les couches de diffusion gazeuse 315 et 324. Dans la plaque bipolaire 21, les soudures 211 sont ménagées localement dans le fond 413 et 423 de certains canaux d'écoulement. Dans un souci de simplification les entrées et sorties ménagées dans les feuilles métalliques 41 et 42 pour communiquer avec les canaux d'écoulement 412 et 422 ne sont pas illustrées.

La figure 3 est une vue en coupe agrandie au niveau d'une soudure 211 entre les feuilles métalliques 41 et 42. Les couches de diffusion gazeuse 315 et 324 sont ici illustrées au repos, c'est-à-dire en l'absence de compression entre leur assemblage membrane/électrodes et la plaque bipolaire 21. Les couches de diffusion gazeuse 315 et 324 sont conçues pour qu'après assemblage de la pile à combustible 1 et serrage de l'empilement de cellules 5, leur pression de contact au niveau des soudures 211 soit inférieure à leur pression de contact moyenne. La pression de contact moyenne d'une couche de diffusion gazeuse avec une plaque bipolaire peut être calculée en divisant l'effort de contact entre la couche de diffusion gazeuse et la plaque bipolaire par la surface de contact entre cette couche de diffusion gazeuse et cette plaque bipolaire. Avantageusement, la pression de contact de la couche de diffusion gazeuse au niveau des soudures 211 est au moins inférieure de 15 % à sa pression de contact moyenne.

À cet effet, les couches de diffusion gazeuse 315 et 324 comportent des zones 316 et 326 respectivement, disposées au niveau des soudures 211. Les zones 316 et 326 sont disposées à l'aplomb des soudures 211. L'épaisseur des zones 316 et 326 est inférieure à l'épaisseur moyenne de leur couche de diffusion gazeuse. Ainsi, lors de la compression liée au serrage de l'empilement de la pile à combustible 1, les zones 316 et 326 seront soumises à une déformation moindre et donc à une pression de contact réduite avec la plaque bipolaire 21 et les assemblages AME. Les zones 316 et 326 présentent typiquement une épaisseur inférieure de 5 µm par rapport à l'épaisseur moyenne de leur couche de diffusion gazeuse. Ces zones 316 et 326 présentent ici une épaisseur homogène. Les couches de diffusion gazeuse 316 et 326 comportent avantageusement, en l'absence de compression, une première face plane et une deuxième face en relief délimitant respectivement les zones 316 et 326. En l'occurrence, la face en relief est placée en contact avec un assemblage membrane/électrodes, cependant on peut également placer la face en relief en contact avec la plaque bipolaire 21.

Les zones 316 et 326 s'étendent latéralement jusqu'à des canaux d'écoulement adjacents 412 et 422 respectivement. Les zones 316 et 326 sont ainsi respectivement en contact avec les crêtes 415 et 425 disposées de part et d'autre des soudures 211.

Comme illustré à la figure 4, les zones de moindre pression de contact 316 entourent les soudures 211. Les soudures 211 sont ici ménagées de façon répartie longitudinalement dans un canal d'écoulement 412. Les soudures 211 sont ici réalisées localement sous la forme d'une série de points de soudure rapprochés.

Au stade de la conception, on peut déterminer la différence d'épaisseur au repos entre les zones 316 et l'épaisseur moyenne ou nominale d'une couche de diffusion gazeuse, cette différence d'épaisseur permettant après montage d'obtenir une pression inférieure au niveau des soudures, et ainsi de compenser la conductivité supérieure des soudures.

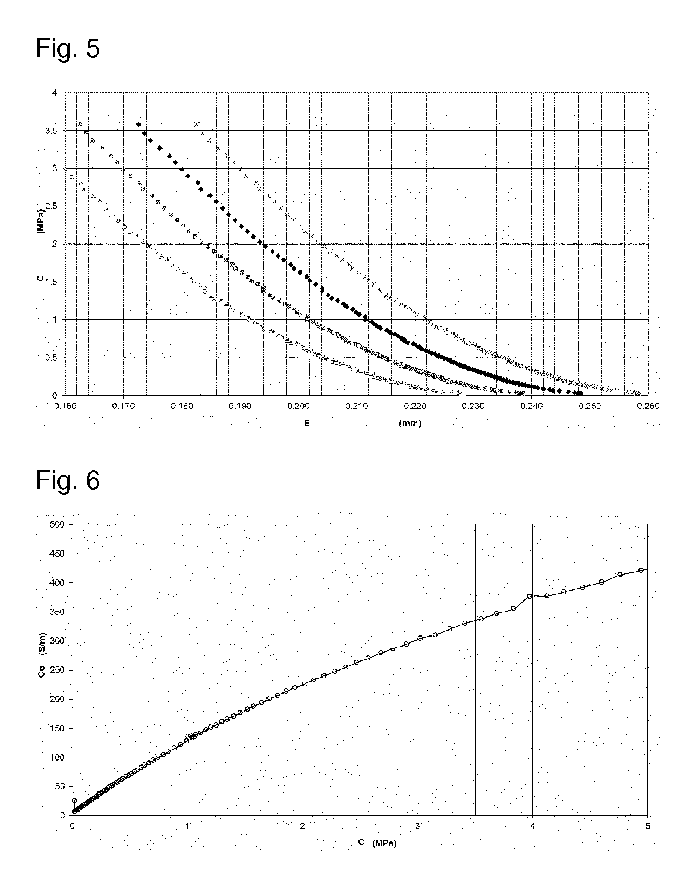

À cet effet, on peut déterminer au préalable :
- une loi permettant de déduire l'épaisseur de la couche de diffusion gazeuse en fonction de sa pression de contact, et en fonction de son épaisseur au repos. Cette loi peut par exemple être déterminée lors de tests de déformation effectués avec le matériau de la couche de diffusion gazeuse. Dans l'exemple détaillé par la suite, une telle loi est définie par l'intermédiaire d'un abaque tel que celui illustré à la figure 5. Pour différentes épaisseurs au repos de la couche de diffusion gazeuse, cet abaque fournit l'épaisseur Ep de cette couche pour différentes pressions de contact C ;
- une loi permettant de déduire la conductivité dans l'épaisseur de la couche de diffusion gazeuse en fonction de la pression de contact qui lui est appliquée. Cette loi peut par exemple être déterminée lors de tests de conductivité effectués en compression, avec le matériau de la couche de diffusion gazeuse. Dans l'exemple détaillé par la suite, une telle loi est définie par l'intermédiaire d'un diagramme tel que celui illustré à la figure 6. Ce diagramme fournit la conductivité électrique dans l'épaisseur Co de la couche de diffusion gazeuse pour différentes pressions de contact C.

Un exemple de dimensionnement peut être le suivant : on suppose que la résistance de contact entre les feuilles métalliques 41 et 42 est de 0,06Ω alors que la résistance des soudures 211 est sensiblement nulle. Par conséquent, le dimensionnement des zones 316 a pour objectif d'ajouter 0,06Ω au niveau des soudures 211.

On suppose que l'on souhaite une pression moyenne de contact de 1 MPa pour la couche de diffusion gazeuse et que celle-ci présente une épaisseur de 200 µm sous cette pression. On suppose que l'on souhaite une épaisseur identique de 200 µm pour les zones 316. On suppose que les zones 316 formeront deux contacts géométriques rectangulaires de 2,5 par 5 mm chacun avec les crêtes disposées de part et d'autre des soudures.

La résistance R au niveau des soudures peut s'exprimer de la façon suivante :
R=L/(Co*S), avec L l'épaisseur au niveau de la zone 316, S la surface de contact de la zone 316, et Co sa conductivité dans son épaisseur.

En consultant le diagramme de la figure 6, on constate qu'une couche de diffusion gazeuse comprimée à 1 MPa présente une conductivité de 135 S/m. Ainsi, une zone 316 comprimée à 1 MPa présenterait une résistance de 0,06Ω. Comme on souhaite ajouter une résistance de 0,06Ω à cette valeur, il faut déterminer la pression de contact permettant d'obtenir une résistance de 0,12Ω. On déduit du diagramme de la figure 6 qu'une pression de 0,6 MPa fournit une conductivité approximative de 68S/m, permettant d'obtenir une telle valeur de résistance.

On peut ensuite extrapoler l'épaisseur au repos nécessaire pour la zone 316 à partir de l'abaque de la figure 5. On peut ainsi noter qu'une couche de diffusion gazeuse ayant une épaisseur au repos de 240 µm présente une pression de contact de 1 MPa avec une épaisseur de 200 µm. On cherche ensuite quelle courbe correspond à une couche de diffusion gazeuse présentant une même épaisseur sous une pression de contact de 0,6 MPa. La courbe recherchée correspond à une couche de diffusion gazeuse présentant une épaisseur au repos de 230 µm. On en déduit donc que la zone 316 doit être ménagée avec une épaisseur réduite de 10 µm par rapport à une épaisseur nominale de 240 µm.

Les couches de diffusion gazeuse peuvent par exemple être réalisées de façon connue en soi sous forme de fibre, de feutre ou de tissu de graphite sur lequel est fixé un agent hydrophobe tel que du polytétrafluoroéthylène.

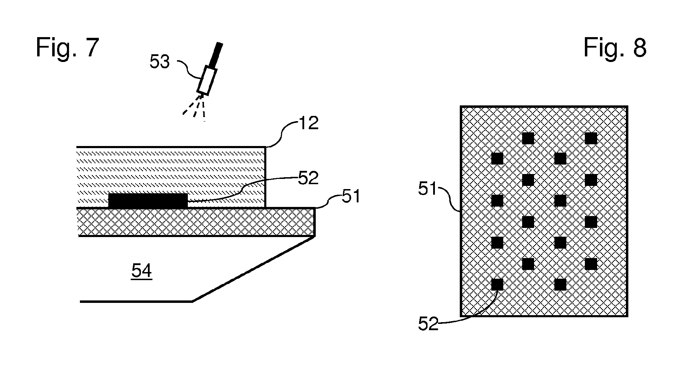

Les figures 7 et 8 illustrent un exemple de procédé de fabrication de couches de diffusion gazeuse avec des zones de moindre épaisseur. Une moindre épaisseur locale peut être obtenue en utilisant des procédés connus de formation de filigranes à partir de suspensions fibreuses. Une couche de diffusion gazeuse comportant des zones de moindre épaisseur sous forme de filigrane peut notamment être réalisée par voie humide.

Selon un tel procédé par voie humide, on applique (comme illustré à la figure 7) une solution aqueuse 12 sur un support 51 poreux présentant une structure connue en soi. Ce support 51 est surmonté d'un relief rapporté 52 (parfois appelé galvano), définissant des zones de moindre épaisseur dans la couche de diffusion gazeuse à fabriquer. La combinaison d'un support 51 et d'un relief rapporté 52 pour la formation d'une telle couche de diffusion gazeuse est illustrée en vue de dessus à la figure 8. Un dispositif 54 de récupération d'eau en excès est disposé sous le support 51, et inclut par exemple un dispositif d'aspiration par dépression. Le support 51 est destiné à laisser filtrer l'eau incluse dans la solution aqueuse 12 pour conserver le reste des composants de la solution au-dessus de ce support 51.

La solution aqueuse inclut des fibres de carbone (connues en soi dans la formation de couches de diffusion gazeuse) et un matériau liant (par exemple de l'alcool de polyvinyle). La solution aqueuse 12 peut se présenter sous la forme d'une dispersion incluant les différents éléments.

Comme illustré dans l'exemple, la solution aqueuse 12 peut par exemple être appliquée par l'intermédiaire d'une buse de projection 53 mobile par rapport au support 51. En vue d'une telle application de la solution aqueuse 12, celle-ci pourra présenter une proportion massique en fibres de carbone inférieure ou égale à 0,02% (par exemple égale à 0,01 %) lors de la projection. Le matériau liant peut par exemple constituer 5 à 10% de la proportion massique de la couche de diffusion gazeuse formée.

Une fois la solution aqueuse 12 appliquée sur le support 51, on laisse la majeure partie de l'eau de celle-ci s'évacuer à travers le support 51, jusqu'à obtenir un élément suffisamment solide pour permettre sa manipulation. L'élément solidifié comporte une zone amincie dont l'épaisseur est définie par la forme du relief 52. L'élément solidifié peut ensuite subir d'autres traitements tels qu'un séchage au four ou un pressage, jusqu'à obtenir une couche de diffusion gazeuse devant être assemblée à l'intérieur de la pile à combustible 1. On réalise avantageusement une couche de diffusion gazeuse présentant une composition sensiblement homogène.

Un procédé de fabrication par voie humide permet en particulier d'obtenir une couche de diffusion gazeuse présentant une première face plane (à la rugosité près du matériau de la couche de diffusion gazeuse) et une deuxième face en relief.

Concernant les soudures des feuilles métalliques 41 et 42, leur densité est essentiellement définie par la résistance mécanique souhaitée de la liaison entre les feuilles 41 et 42 d'une plaque bipolaire. Cette densité de soudures est avantageusement comprise entre 0,1 et 1 soudures par cm². La densité de soudure peut également être définie par un rapport entre la surface de soudure et la section de la plaque bipolaire. Les soudures réalisées peuvent être ponctuelles, rectilignes ou curvilignes avec des croisements.

Les feuilles métalliques 41 et 42 sont avantageusement réalisées en acier inoxydable, matériau très courant et adapté à de nombreux procédés de transformation industriels largement répandus. Le relief des feuilles métalliques 41 et 42, notamment les canaux d'écoulements 412 et 422, est par exemple généré par emboutissage ou estampage de feuilles métalliques plates. Les feuilles métalliques 41 et 42 des différentes plaques bipolaires peuvent être identiques, afin d'accroître l'effet d'échelle dans les composants destinés à la fabrication de la pile à combustible 1.

## Revendications

1. Pile à combustible, comprenant :
- des premier et deuxième assemblages membrane/électrodes (31,32) ;
- une plaque bipolaire métallique (21) interposée entre les premier et deuxième assemblages membrane/électrodes, cette plaque bipolaire comprenant des première et deuxième feuilles métalliques (41, 42) en vis-à-vis des premier et deuxième assemblages membrane/électrodes et solidarisées par des soudures (211) ;
- une couche de diffusion gazeuse (315) interposée et comprimée entre le premier assemblage membrane/électrodes (31) et la plaque bipolaire (21) ;
**caractérisée en ce que**, en l'absence de compression sur la couche de diffusion gazeuse (315), des zones de la couche de diffusion gazeuse entourant les soudures (211) présentent une épaisseur inférieure d'au moins 5µm par rapport à l'épaisseur moyenne de la couche de diffusion gazeuse, de sorte que la pression de contact de la couche de diffusion gazeuse (315) avec la plaque bipolaire au niveau des soudures est inférieure à sa pression de contact moyenne avec la plaque bipolaire.

2. Pile à combustible (1) selon la revendication 1, dans laquelle lesdites zones (316) entourant les soudures présentent une épaisseur homogène.

3. Pile à combustible selon l'une quelconque des revendications précédentes, dans laquelle ladite couche de diffusion gazeuse (21), en l'absence de compression, comporte une première face plane et une deuxième face en relief.

4. Pile à combustible selon l'une quelconque des revendications précédentes, dans laquelle la pression de contact de la couche de diffusion gazeuse (315) au niveau des soudures (211) est au moins inférieure de 15% à sa pression de contact moyenne.

5. Pile à combustible selon l'une quelconque des revendications précédentes, dans laquelle :
- la première feuille métallique (41) de la plaque bipolaire (21) comporte des surfaces (415) en contact avec la couche de diffusion gazeuse (315) et entre lesquelles des canaux de guidage de gaz entre la feuille et la couche de diffusion gazeuse (315) sont ménagées ;
- lesdites soudures (211) sont ménagées dans le fond (413) des canaux de guidage ; et
- lesdites surfaces (415) de la première feuille disposées de part et d'autre desdites soudures présentent une pression de contact avec la couche de diffusion gazeuse inférieure à la pression de contact moyenne entre la couche de diffusion gazeuse et la première feuille métallique.

6. Pile à combustible selon l'une quelconque des revendications précédentes, comprenant :
- des troisième et quatrième assemblages membrane/électrodes ;
- une autre plaque bipolaire métallique interposée entre les troisième et quatrième assemblages membrane/électrodes, cette plaque bipolaire comprenant des troisième et quatrième feuilles métalliques en vis-à-vis des troisième et quatrième assemblages membrane/électrodes et solidarisées par des soudures, les soudures des première et deuxième feuilles métalliques étant superposées aux soudures des troisième et quatrième feuilles métalliques ;
- une autre couche de diffusion gazeuse interposée et comprimée entre le troisième assemblage membrane/électrodes et l'autre plaque bipolaire, la pression de contact de l'autre couche de diffusion gazeuse au niveau des soudures étant inférieure à sa pression de contact moyenne.

7. Procédé de fabrication d'une pile à combustible (1) comprenant les étapes de :
- former le coeur d'une cellule électrochimique (5) en plaçant une couche de diffusion gazeuse (315) en contact avec une première électrode d'un assemblage membrane/électrodes comportant une membrane échangeuse de protons (100), ladite couche de diffusion gazeuse présentant une zone (316) ayant une épaisseur inférieure à l'épaisseur moyenne de cette couche de diffusion gazeuse ;
- séparer le coeur de la cellule électrochimique formée et le coeur d'une autre cellule électrochimique, par l'intermédiaire d'une plaque bipolaire comportant deux feuilles métalliques solidarisées par des soudures, en positionnant les soudures au niveau desdites zones d'épaisseur inférieure ;
- comprimer ledit empilement de sorte que ladite couche de diffusion gazeuse (315) dudit coeur de la cellule électrochimique est comprimée en contact avec la plaque bipolaire avec une pression de contact inférieure au niveau des zones d'épaisseur inférieure par rapport à sa pression de contact moyenne.

8. Procédé de fabrication d'une pile à combustible selon la revendication 7, comprenant une étape préalable de fabrication de la couche de diffusion gazeuse (315) présentant une zone d'épaisseur inférieure par un procédé de formation de filigrane par voie humide.

9. Procédé de fabrication d'une pile à combustible selon la revendication 8, dans lequel l'étape de fabrication de la couche de diffusion gazeuse (315) comprend l'application d'une couche d'une solution aqueuse incluant des fibres de carbone et un matériau liant, et comprend la solidification des composants de la solution aqueuse.

10. Procédé de fabrication d'une pile à combustible selon l'une quelconque des revendications 7 à 9, dans lequel ladite couche de diffusion gazeuse solidifiée présente une composition sensiblement homogène.

11. Procédé de fabrication d'une pile à combustible selon l'une quelconque des revendications 7 à 10, dans lequel la couche de diffusion gazeuse solidifiée comporte une première face plane et une deuxième face en relief.

## Patentansprüche

1. Brennstoffzelle, umfassend:
- erste und zweite Membran/Elektroden-Baugruppen (31, 32);
- eine bipolare Metallplatte (21), die zwischen die erste und die zweite Membran/Elektroden-Baugruppe eingefügt ist, wobei diese bipolare Platte eine erste und zweite Metallfolie (41, 42) umfasst, die gegenüber der ersten und zweiten Membran/Elektroden-Baugruppe liegen und durch Schweißstellen (211) fest verbunden sind;
- eine Gasdiffusionsschicht (315), die zwischen der ersten Membran/Elektroden-Baugruppe (31) und der bipolaren Platte (21) eingefügt und komprimiert ist;
**dadurch gekennzeichnet, dass** bei fehlender Kompression auf die Gasdiffusionsschicht (315) Bereiche der Gasdiffusionsschicht, die die Schweißstellen (211) umgeben, eine Dicke aufweisen, die mindestens 5 µm geringer ist als die mittlere Dicke der Gasdiffusionsschicht, so dass der Kontaktdruck der Gasdiffusionsschicht (315) mit der bipolaren Platte an den Schweißstellen kleiner ist als ihr mittlerer Kontaktdruck mit der bipolaren Platte.

2. Brennstoffzelle (1) nach Anspruch 1, wobei die Bereiche (316), die die Schweißstellen umgeben, eine homogene Dicke aufweisen.

3. Brennstoffzelle nach einem der vorhergehenden Ansprüche, wobei die Gasdiffusionsschicht (21) bei fehlender Kompression eine erste ebene Seite und eine zweite Reliefseite umfasst.

4. Brennstoffzelle nach einem der vorhergehenden Ansprüche, wobei der Kontaktdruck der Gasdiffusionsschicht (315) an den Schweißstellen (211) mindestens 15 % kleiner ist als ihr mittlerer Kontaktdruck.

5. Brennstoffzelle nach einem der vorhergehenden Ansprüche, wobei:
- die erste Metallfolie (41) der bipolaren Platte (21) Oberflächen (415) umfasst, die mit der Gasdiffusionsschicht (315) in Kontakt sind und zwischen denen Kanäle zum Führen von Gas zwischen der Folie und der Gasdiffusionsschicht (315) angebracht sind;
- die Schweißstellen (211) am Boden (413) der Führungskanäle angebracht sind; und
- die Oberflächen (415) der ersten Folie, die beiderseits der Schweißstellen angebracht sind, einen Kontaktdruck mit der Gasdiffusionsschicht aufweisen, der kleiner ist als der mittlere Kontaktdruck zwischen der Gasdiffusionsschicht und der ersten Metallfolie.

6. Brennstoffzelle nach einem der vorhergehenden Ansprüche, umfassend:
- dritte und vierte Membran/Elektroden-Baugruppen;
- eine andere bipolare Metallplatte, die zwischen die dritte und vierte Membran/Elektroden-Baugruppe eingefügt ist, wobei diese bipolare Platte eine dritte und vierte Metallfolie umfasst, die gegenüber der dritten und vierten Membran/Elektroden-Baugruppe liegen und durch Schweißstellen fest verbunden sind, wobei die Schweißstellen der ersten und zweiten Metallfolie die Schweißstellen der dritten und vierten Metallfolie überlagern;
- eine andere Gasdiffusionsschicht, die zwischen der dritten Membran/Elektroden-Baugruppe und der anderen bipolaren Platte eingefügt und komprimiert ist, wobei der Kontaktdruck der anderen Gasdiffusionsschicht an den Schweißstellen kleiner ist als ihr mittlerer Kontaktdruck.

7. Verfahren zur Herstellung einer Brennstoffzelle (1), das die folgenden Schritte umfasst:
- Formen des Kerns einer elektrochemischen Zelle (5), indem eine Gasdiffusionsschicht (315) in Kontakt mit einer ersten Elektrode einer Membran/Elektroden-Baugruppe, die eine Protonenaustauschermembran (100) umfasst, angeordnet wird, wobei die Gasdiffusionsschicht einen Bereich (316) aufweist, der eine Dicke aufweist, die geringer ist als die mittlere Dicke dieser Gasdiffusionsschicht;
- Trennen des Kerns der geformten elektrochemischen Zelle und des Kerns einer anderen elektrochemischen Zelle mithilfe einer bipolaren Platte, die zwei Metallfolien umfasst, die durch Schweißstellen fest miteinander verbunden sind, indem die Schweißstellen an den Bereichen mit geringerer Dicke angeordnet werden;
- Komprimieren des Stapels, so dass die Gasdiffusionsschicht (315) des Kerns der elektrochemischen Zelle in Kontakt mit der bipolaren Platte an Bereichen geringerer Dicke mit einem Kontaktdruck komprimiert wird, der kleiner ist als ihr mittlerer Kontaktdruck.

8. Verfahren zur Herstellung einer Brennstoffzelle nach Anspruch 7, umfassend einen vorausgehenden Schritt zur Herstellung der Gasdiffusionsschicht (315), die einen Bereich geringerer Dicke aufweist, durch ein Verfahren zum Nassformen eines Wasserzeichens.

9. Verfahren zur Herstellung einer Brennstoffzelle nach Anspruch 8, wobei der Schritt zur Herstellung der Gasdiffusionsschicht (315) das Auftragen einer Schicht aus einer wässrigen Lösung umfasst, die Kohlefasern und ein Bindermaterial enthält, und die Verfestigung der Bestandteile der wässrigen Lösung umfasst.

10. Verfahren zur Herstellung einer Brennstoffzelle nach einem der Ansprüche 7 bis 9, wobei die verfestigte Gasdiffusionsschicht eine im Wesentlichen homogene Zusammensetzung aufweist.

11. Verfahren zur Herstellung einer Brennstoffzelle nach einem der Ansprüche 7 bis 10, wobei die verfestigte Gasdiffusionsschicht eine erste ebene Seite und eine zweite Reliefseite umfasst.

## Claims

1. Fuel cell stack, comprising:
- first and second membrane electrode assemblies (31, 32);
- a metal bipolar plate (21) interposed between the first and second membrane electrode assemblies, this bipolar plate comprising first and second metal sheets (41, 42) facing the first and second membrane electrode assemblies and securely fastened by welds (211); and
- a gas diffusion layer (315) interposed and compressed between the first membrane electrode assembly (31) and the bipolar plate (21),
**characterized in that**, in the absence of compression of the gas diffusion layer (315), regions of the gas diffusion layer surrounding the welds (211) have a thickness smaller by at least 5 µm relative to the average thickness of the gas diffusion layer, so that the contact pressure of the gas diffusion layer (315) with the bipolar plate in the area of the welds is lower than its average contact pressure with the bipolar plate.

2. Fuel cell stack (1) according to Claim 1, in which said regions (316) surrounding the welds have a uniform thickness.

3. Fuel cell stack according to either one of the preceding claims, in which said gas diffusion layer (21), in the absence of compression, has a flat first face and a second face containing a relief.

4. Fuel cell stack according to any one of the preceding claims, in which the contact pressure of the gas diffusion layer (315) in the area of the welds (211) is at least 15% lower than its average contact pressure.

5. Fuel cell stack according to any one of the preceding claims, in which:
- the first metal sheet (41) of the bipolar plate (21) comprises surfaces (415) making contact with the gas diffusion layer (315) and between which channels for guiding gas between the sheet and the gas diffusion layer (315) are produced;
- said welds (211) are produced in the bottom (413) of the guiding channels; and
- those of said surfaces (415) of the first sheet that are located on either side of said welds have a contact pressure with the gas diffusion layer lower than the average contact pressure between the gas diffusion layer and the first metal sheet.

6. Fuel cell stack according to any one of the preceding claims, comprising:
- third and fourth membrane electrode assemblies;
- another metal bipolar plate interposed between the third and fourth membrane electrode assemblies, this bipolar plate comprising third and fourth metal sheets facing the third and fourth membrane electrode assemblies and securely fastened by welds, the welds of the first and second metal sheets being superposed on the welds of the third and fourth metal sheets; and
- another gas diffusion layer interposed and compressed between the third membrane electrode assembly and the other bipolar plate, the contact pressure of the other gas diffusion layer in the area of the welds being lower than its average contact pressure.

7. Process for manufacturing a fuel cell stack (1) comprising steps of:
- forming the core of an electrochemical cell (5) by placing a gas diffusion layer (315) in contact with a first electrode of a membrane electrode assembly comprising a proton exchange membrane (100), said gas diffusion layer containing a region (316) having a thickness smaller than the average thickness of this gas diffusion layer;
- separating the core of the electrochemical cell thus formed and the core of another electrochemical cell, by way of a bipolar plate comprising two metal sheets securely fastened by welds, the welds being positioned in the area of said regions of smaller thickness; and
- compressing said multilayer so that said gas diffusion layer (315) of said core of the electrochemical cell is compressed in contact with the bipolar plate with a contact pressure that is lower in the area of the regions of smaller thickness relative to its average contact pressure.

8. Process for manufacturing a fuel cell stack according to Claim 7, comprising a prior step of manufacturing the gas diffusion layer (315) containing a region of smaller thickness with a wet watermark-forming process.

9. Process for manufacturing a fuel cell stack according to Claim 8, in which the step of manufacturing the gas diffusion layer (315) comprises applying a layer of an aqueous solution containing carbon fibers and a binder material, and comprises solidifying components of the aqueous solution.

10. Process for manufacturing a fuel cell stack according to any one of Claims 7 to 9, in which said solidified gas diffusion layer has a substantially uniform composition.

11. Process for manufacturing a fuel cell stack according to any one of Claims 7 to 10, in which the solidified gas diffusion layer has a flat first face and a second face containing a relief.
